# EUROPÄISCHE PATENTSCHRIFT

(11) **EP 2 454 976 B1**
(45) Veröffentlichungstag und Bekanntmachung des Hinweises auf die Patenterteilung: **01.10.2014**
(21) Anmeldenummer: 11401628.0
(22) Anmeldetag: 15.11.2011
(51) Int. Cl.: A47J 31/44, A47J 31/58

(54) **Getränkebereiter mit höhenverstellbarem Getränkeauslauf und Sicherheitsabschaltung**
Beverage preparer with vertically adjustable beverage disposal and safety shutdown
Dispositif de préparation de boissons doté d'une sortie de boisson réglable en hauteur et d'un disjoncteur

(30) Priorität: 23.11.2010 DE 102010060731
(43) Veröffentlichungstag der Anmeldung: 23.05.2012
(73) Patentinhaber: Miele & Cie. KG, 33332 Gütersloh (DE)
(72) Erfinder: Lind, Martin, 33397 Rietberg (DE)

(56) Entgegenhaltungen:
- EP-A1- 1 656 863
- DE-U1-202005 011 476

## Beschreibung

Die Erfindung betrifft einen Getränkebereiter mit einem Getränkeausgabebereich, einer Bedien- und Steuerungseinrichtung zum Auslösen eines Getränkeausgabevorganges in ein im Getränkeausgabebereich abgestelltes Gefäß, wobei der Getränkeauslauf mittels Antriebsmotor in der Höhe verstellbar ausgebildet ist und in Abhängigkeit der Gefäßrandhöhe relativ zum Gefäßrand positionierbar ist.

Ein derartiger Getränkebereiter ist aus der DE 10 2008 029 835 A1, der DE 20 2005 011 476 U1, oder der EP 1 745 726 B1 bekannt. Die Sensoranordnung zur Gefäßranderkennung ist ortsfest mit dem bewegbaren Getränkeauslauf gekoppelt. Die Sensoranordnung ist an einem Träger angeordnet, der gemeinsam mit dem Getränkeauslauf verfahrbar ist. Der Träger ist derart ausgebildet und mit dem Getränkeauslauf gekoppelt, dass die Sensoren zur Gefäßranderkennung bei der Höhenverstellung des Getränkeauslaufs auf der Außenseite des Gefäßes verfahren.

Aus der JP 06046876 Y ist eine Abgabevorrichtung für Getränke mit einem höhenverstellbar ausgebildeten Getränkeauslauf bekannt, bei der die Position des Getränkeauslaufs in Abhängigkeit der Gefäßhöhe einstellbar ist. Die Gefäßhöhe wird über einen Sensor erfasst, der gemeinsam mit dem höhenverstellbaren Getränkeauslauf an einem Träger angeordnet ist.

Aus der DE 10 2004 050 365 A1 ist es bekannt, bei einem motorisch höhenverstellbar ausgebildeten Getränkeauslauf an dem Auslaufrohr einen Gefäßrandsensor anzuordnen. Der Gefäßrandsensor ist als Infrarotsensor ausgebildet, welcher gemeinsam mit dem Auslaufrohr nach unten fährt, bis der Gefäßrandsensor den Rand des Gefäßes erfasst und meldet.

Die DE 20 2005 011 476 U1 offenbart einen Getränkebereiter, der einen als Lichtschranke ausgebildeten Sensor am beweglichen Getränkeauslauf umfasst. Sobald der obere Bereich der Tasse die Lichtschranke beeinflusst, wird die Verfahrbewegung des Getränkeauslaufs gestoppt.

Der Erfindung stellt sich das Problem neben der Gefäßranderkennung, durch die die Bewegung des Getränkeauslaufes gestoppt wird, wenn ein Gefäßrand erkannt wird, eine zusätzliche Sicherheitsabschaltung für den Antriebsmotor vorzusehen, wenn der Gefäßrand von den Sensoren der Gefäßranderkennung nicht oder zu spät sensiert wird.

Erfindungsgemäß wird dieses Problem durch einen Getränkebereiter mit den Merkmalen des Patentanspruchs 1 gelöst. Vorteilhafte Ausgestaltungen und Weiterbildungen der Erfindung ergeben sich aus den nachfolgenden Unteransprüchen.

Die mit der Erfindung erreichbaren Vorteile bestehen insbesondere darin, dass die Bewegung des Getränkeauslaufs unmittelbar bei Kontakt des Gefäßrandes mit der Sicherheitseinrichtung am Getränkeauslauf gestoppt wird. Dadurch wird ein Umkippen des Gefäßes im Getränkeausgabebereich verhindert.

Ein Ausführungsbeispiel der Erfindung ist in den Zeichnungen rein schematisch dargestellt und wird nachfolgend näher beschrieben. Es zeigt
- Figur 1: einen erfindungsgemäßen Getränkebereiter in perspektivischer Darstellung der Frontansicht,
- Figur 2: den Getränkeauslauf 4 schematisch in der Seitenansicht in der oberen Betriebsstellung,
- Figur 3: Den Getränkeauslauf in bis auf den Gefäßrand 9.1 abgesenkter Betriebsstellung,
- Figur 4: ein erstes Ausführungsbeispiel für die Lagerung der Schaltwippe 11,
- Figur 5: den Getränkeauslauf 4 mit der Sicherheitseinrichtung 10 in der Seitenansicht im Schnitt, Schaltwippe 11 in Grundposition, Schnittlinie durch die Feder 14,
- Figur 6: den Getränkeauslauf 4 mit der Sicherheitseinrichtung 10 in der Seitenansicht im Schnitt, Schaltwippe 11 in Grundposition, Schnittlinie durch den Schaltnocken 16,
- Figur 7: ein zweites Ausführungsbeispiel für die Lagerung der Schaltwippe 11 mittels Rasthaken 17.

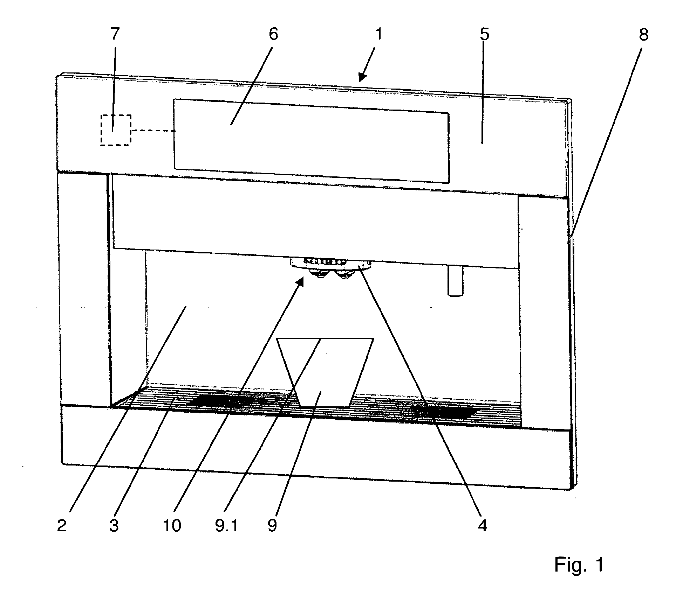

Der in Figur 1 dargestellte Getränkebereiter 1 weist einen nischenförmig ausgebildeten Getränkeausgabebereich 2 auf. Der Getränkeausgabebereich 2 wird nach unten durch eine Stellfläche 3 für Tassen, Gläser etc. begrenzt. Im oberen Bereich des Getränkeausgabebereichs 2 ist ein höhenverstellbarer Getränkeauslauf 4 angeordnet. Der hier dargestellte Getränkeauslauf 4 ist mit zwei Ausgabeöffnungen (4.1) ausgebildet. Oberhalb des Getränkeausgabebereichs 2 ist die Bedienblende 5 der Bedieneinrichtung angeordnet, die bei diesem Ausführungsbeispiel mit einer grafikfähigen Anzeige 6 ausgebildet ist. Die Bedieneinrichtung ist mit einer durch unterbrochene Linien symbolisch dargestellten Steuerungseinrichtung 7 des Getränkebereiters 1 signalübertragend verbunden. Der Getränkeauslauf 4 steht mit einer im Getränkebereiter 1 integriert angeordneten Einheit zur Zubereitung (nicht dargestellt) der Getränke in fluidleitender Verbindung. Die wesentlichen Bauteile des Getränkebereiters 1 sind bei dem dargestellten Ausführungsbeispiel hinter einer Tür 8 integriert angeordnet. Die Tür 8 schließt den nicht näher dargestellten Korpus des Getränkebereiters 1 nach vorne hin ab. In dem Korpus selbst sind beispielsweise Vorrats- und Entsorgebehälter sowie die Einheit zur Zubereitung der Getränke, z.B. eine Brüheinheit für den Kaffee, angeordnet.

In Figur 1 ist der höhenverstellbare Getränkeauslauf 4 in der obersten Betriebslage dargestellt. In dieser Lage ist es möglich, auch große Tassen zur Aufnahme von Kaffee, Milch und/oder Milchschaum unter den Getränkeauslauf 4 zu stellen. Der Getränkeauslauf 4 ist motorisch verfahrbar. Er verfährt in vertikaler Richtung in Bezug auf das auf der Stellfläche 3 positionierte Gefäß 9 wobei der Getränkeauslauf 4 in Abhängigkeit der Gefäßrandhöhe relativ zum Gefäßrand 9.1 positionierbar ist. Die Gefäßrandhöhe wird dabei von geeigneten Sensoreinrichtungen erfasst oder ist als Speicherwert in der Steuerungseinrichtung 7 hinterlegt.

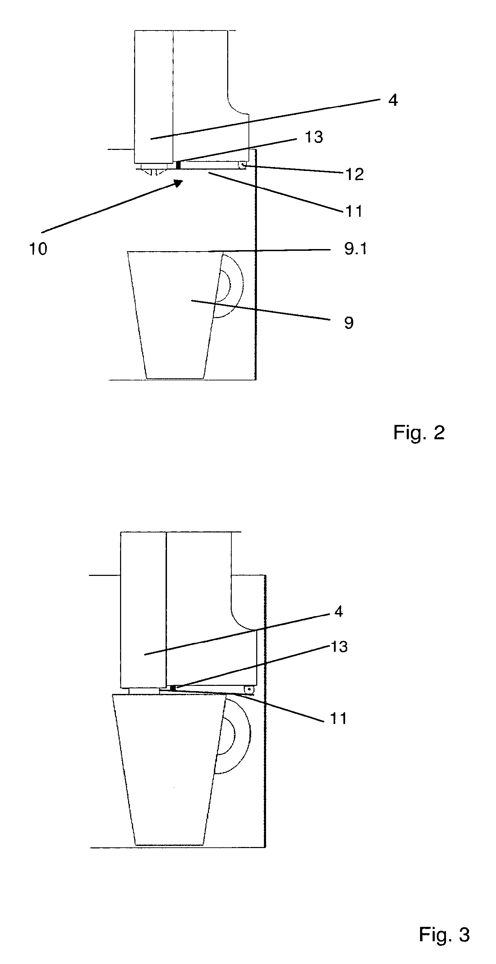

In der Figur 2 ist der Getränkeauslauf 4 sowie ein darunter abgestelltes Gefäß 9 schematisch als Einzelheit in der Seitenansicht in der oberen Betriebsstellung dargestellt. Der höhenverstellbare Getränkeauslauf 4 ist mit einer Sicherheitseinrichtung 10 ausgebildet, um sicherzustellen, dass beispielsweise bei einer Fehlfunktion der Sensoreinrichtung zur Erfassung der Gefäßrandhöhe ein Umkippen des unter dem Getränkeauslauf 4 stehenden Gefäßes 9 vermieden wird. Dazu ist an dem Getränkeauslauf 4 eine Schaltwippe 11 angeordnet, die in mindestens einer Lagerstelle 12 schwenk- oder kippbar gelagert ist und einen Sicherheitsschalter 13 bei Kontakt mit dem Gefäßrand 9.1 betätigt (siehe Figur 3).

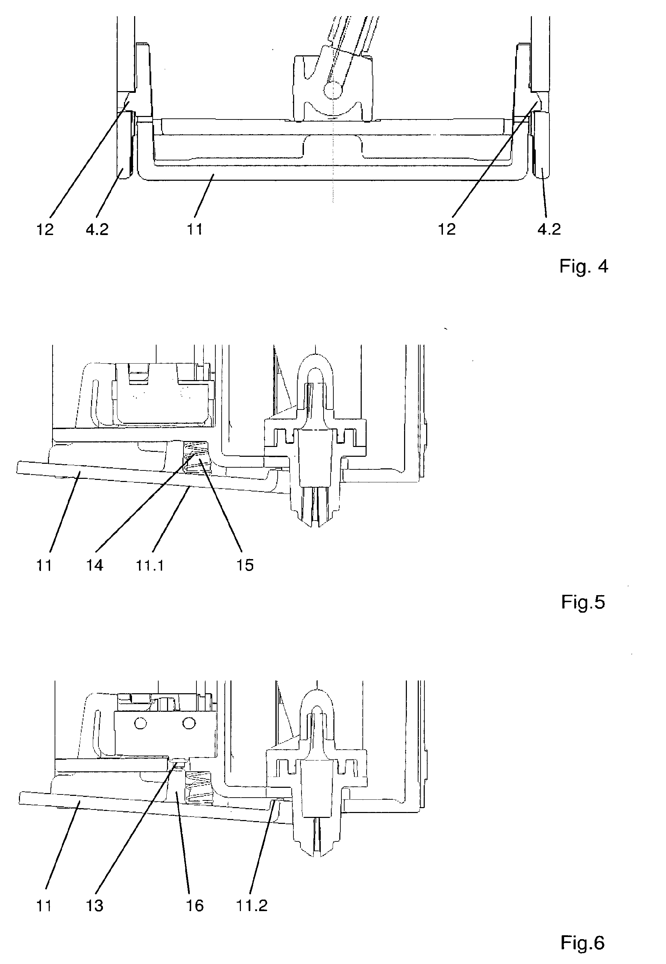

In der Figur 4 ist ein erstes Ausführungsbeispiel der Sicherheitseinrichtung 10 gezeigt. Die Sicherheitseinrichtung 10 umfasst eine federbelastete Schaltwippe 11, die schwenkbar am Getränkeauslauf 4 gelagert ist. Bei dem hier dargestellten Ausführungsbeispiel weist der Getränkeauslauf 4 zwei gegenüberliegende Lagerstellen 12 für die Aufnahme der Schaltwippe 11 in zwei Drehpunkten auf. Je nach konstruktiver Gestaltung des Getränkeauslaufs 4 und der Sicherheitseinrichtung 10 ist die Aufnahme der Schaltwippe 11 auch in nur einem Drehpunkt möglich. Die Schaltwippe 11 ist vorzugsweise derart dimensioniert, dass sie die Unterseite des Getränkeauslaufs 4 annähernd überdeckt (siehe auch Figur 5). So ist gewährleistet, dass auch ein nicht korrekt bzw. außermittig abgestelltes Gefäß 9 bei der Bewegung des Getränkeauslaufs 4 in Kontakt mit der Schaltwippe 11 der Sicherheitseinrichtung 10 gelangt. Die Schaltwippe 11 weist eine Schaltfläche 11.1 auf, die die Ausgabeöffnungen 4.1 des Getränkeauslaufs 4 in Teilbereichen umschließt und bei Kontakt mit dem Gefäßrand 9.1 einen Sicherheitsschalter 13 (siehe Figur 6) zur Unterbrechung der Höhenverstellung des Getränkeauslaufs 4 durch den Antriebsmotor betätigt. Die Schaltfläche 11.1 ist mit einem zur Frontseite und zu den Seiten des Getränkeausgebebereichs 2 gerichteten hochgezogenem Rand 11.2 (siehe auch Figur 6) ausgebildet, der eine Sicht auf die Bauteile hinter der Schaltfläche 11.1 verhindert und gleichzeitig als Spritzschutz für die Bauteile dient. In dem hochgezogenen Rand 11.2 sind vorzugsweise die gegenüberliegenden Lagerstellen 12 für die Aufnahme der Schaltwippe in zwei Drehpunkten am Getränkeauslauf ausgebildet (siehe Figur 4).

Bei dem in Figur 4 gezeigten Ausführungsbeispiel sind die Lagerstellen 12 der Schaltwippe 11 in dem hochgezogenen Rand 11.2 ausgebildet. Die gegenüberliegenden Lagerstellen 12 für die Aufnahme der Schaltwippe 11 sind in den seitlichen Wandabschnitten 4.2 des Getränkeauslaufs 4 angeordnet. In diesen Lagerstellen 12 ist die Schaltwippe 11 schwenkbar gelagert.

Figur 5 zeigt den Getränkeauslauf 4 mit der Sicherheitseinrichtung 10 in der Seitenansicht im Schnitt, wobei die Schaltwippe 11 in Grundposition steht. Die Schaltwippe 11 wird bei diesem Ausführungsbeispiel mittels einer Feder 14 in dieser Position gehalten. Die Schaltwippe 11 weist auf der Rückseite der Schaltfläche 11.1 eine Führung für die Feder 14 auf.

Trifft die Schaltwippe 11 bei der Höhenverstellung des Getränkeauslaufs 4 auf den Gefäßrand 9.1 (siehe schematische Darstellung Figur 3), wird sie entgegen der Federkraft um den Drehpunkt nach oben bewegt (siehe Figur 5). Auf der Rückseite der Schaltfläche 11.1, bzw. auf der zum Inneren des Getränkeauslaufs 4 gerichteten Seite, ist ein Schaltnocken 16 (siehe Figur 6) angeordnet, der den Sicherheitsschalter 13 der Sicherheitseinrichtung 10 bei Kontakt der Schaltwippe 11 mit dem Gefäßrand 9.1 betätigt. Dieser sendet ein Signal zur Steuerungseinrichtung 7 wodurch die Höhenverstellung durch den Antriebsmotor stoppt.

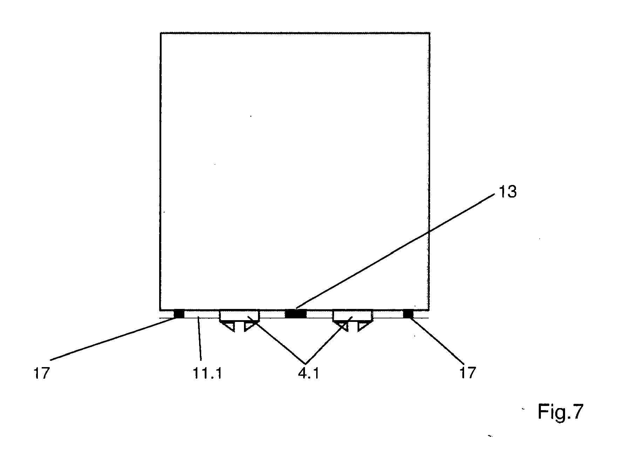

In der Figur 7 ist ein weiteres Ausführungsbeispiel für die Lagerung der Schaltwippe 11 Getränkeauslauf 4 schematisch als Einzelheit dargestellt. Die Schaltwippe ist dabei in mindestens einer Aufnahme mittels Rasthaken 17 hängend gelagert. Vorzugsweise ist eine Dreipunkt-Aufhängung vorgesehen, bei der jeder Rasthaken 17 federnd am Getränkeauslauf 4 gelagert ist. Durch diese Aufhängung ist die Schaltwippe 11 in der Ebene kippbar angeordnet. Den Rasthaken 17 ist mindestens ein Sicherheitsschalter 13 zugeordnet. Die Schaltwippe 11 umschließt die Ausgabeöffnungen 4.1 flächig bis zu den Außenrändern des Getränkeauslaufs 4.

## Patentansprüche

1. Getränkebereiter (1) mit einem Getränkeausgabebereich (2), einer Bedien- und Steuerungseinrichtung (7) zum Auslösen eines Getränkeausgabevorganges in ein im Getränkeausgabebereich (2) abgestelltes Gefäß (9), wobei der Getränkeauslauf (4) mittels Antriebsmotor in der Höhe verstellbar ausgebildet ist und in Abhängigkeit der Gefäßrandhöhe relativ zum Gefäßrand (9.1) positionierbar ist,
**dadurch gekennzeichnet,**
**dass** der Getränkeauslauf 4 eine Sicherheitseinrichtung (10) mit einer am Getränkeauslauf (4) angeordneten Schaltwippe (11) aufweist, die in mindestens einer Lagerstelle (12) schwenk- oder kippbar gelagert ist und einen Sicherheitsschalter (13) bei Kontakt mit dem Gefäßrand 9.1 betätigt zur Unterbrechung der Höhenverstellung des Getränkeauslaufs 4 durch den Antriebsmotor betätigt.

2. Getränkebereiter nach Anspruch 1,
**dadurch gekennzeichnet,**
**dass** die Sicherheitseinrichtung (10) eine federbelastete Schaltwippe (11) aufweist.

3. Getränkebereiter nach Anspruch 1,
**dadurch gekennzeichnet,**
**dass** der Getränkeauslauf (4) zwei gegenüberliegende Lagerstellen (12) für die Aufnahme der Schaltwippe (11) in zwei Drehpunkten aufweist.

4. Getränkebereiter nach einem der Ansprüche 1 bis 3,
**dadurch gekennzeichnet,**
**dass** die Schaltwippe (11) eine Schaltfläche (11.1) aufweist, die die Ausgabeöffnungen (4.1) des Getränkeauslaufs (4) in Teilbereichen umschließt.

5. Getränkebereiter nach Anspruch 4,
**dadurch gekennzeichnet,**
**dass** die Schaltfläche (11.1) mit einem zur Frontseite und zu den Seiten des Getränkeausgebebereichs (2) gerichteten hochgezogenen Rand (11.2) ausgebildet ist.

6. Getränkebereiter nach einem der Ansprüche 1 bis 5,
**dadurch gekennzeichnet,**
**dass** die Schaltwippe (11) auf der Rückseite der Schaltfläche (11.1) einen Schaltnocken (16) aufweist.

7. Getränkebereiter nach einem der Ansprüche 1 bis 6,
**dadurch gekennzeichnet,**
**dass** die Schaltwippe (11) auf der Rückseite der Schaltfläche (11.1) eine Führung (15) für eine Feder (14) aufweist.

8. Getränkebereiter nach Anspruch 1 oder 2,
**dadurch gekennzeichnet,**
**dass** die Schaltwippe (11) am Getränkeauslauf (4) in mindestens einer Aufnahme durch Rasthaken (17) hängend gelagert ist.

9. Getränkebereiter nach mindestens einem der vorgenannten Ansprüche,
**dadurch gekennzeichnet,**
**dass** die Schaltwippe (11) eine Schaltfläche (11.1) aufweist, die die Ausgabeöffnungen (4.1) flächig bis zu den Außenrändern des Getränkeauslaufs (4) umschließt.

## Claims

1. Beverage preparation machine (1) comprising a beverage dispensing region (2), an operation- and control device (7) for triggering a beverage dispensing process into a container (9) positioned in the beverage dispensing region (2), the beverage outlet (4) being designed to be adjustable in height by means of a drive motor and being able to be positioned relative to the container edge (9.1) depending on the height of said container edge,
**characterised in that**
the beverage outlet (4) comprises a safety device (10) having a rocker switch (11) arranged on the beverage outlet (4), which rocker switch is pivotally or tiltably mounted in at least one bearing location (12) and actuates a safety switch (13) upon contact with the container edge (9.1) in order to interrupt the height adjustment of the beverage outlet (4) by the drive motor.

2. Beverage preparation machine according to claim 1,
**characterised in that**
the safety device (10) comprises a spring-loaded rocker switch (11).

3. Beverage preparation machine according to claim 1,
**characterised in that**
the beverage outlet (4) comprises two mutually opposed bearing locations (12) for receiving the rocker switch (11) at two pivot points.

4. Beverage preparation machine according to any of claims 1 to 3,
**characterised in that**
the rocker switch (11) comprises a switching surface (11.1) which surrounds portions of the discharge openings (4.1) of the beverage outlet (4).

5. Beverage preparation machine according to claim 4,
**characterised in that**
the switching surface (11.1) is designed having a raised edge (11.2) facing towards the front and the sides of the beverage dispensing region (2).

6. Beverage preparation machine according to any of claims 1 to 5,
**characterised in that**
the rocker switch (11) comprises a switch cam (16) on the rear of the switching surface (11.1).

7. Beverage preparation machine according to any of claims 1 to 6,
**characterised in that**
the rocker switch (11) comprises a guide (15) for a spring (14) on the rear of the switching surface (11.1).

8. Beverage preparation machine according to either claim 1 or claim 2,
**characterised in that**
the rocker switch (11) is suspended from the beverage outlet (4) in at least one retainer by means of catch hooks (17).

9. Beverage preparation machine according to at least one of the preceding claims,
**characterised in that**
the rocker switch (11) comprises a switching surface (11.1) which surrounds the discharge openings (4.1) in a planar manner as far as the outer edges of the beverage outlet (4).

## Revendications

1. Préparateur de boisson (1) avec une zone de distribution de boisson (2), un dispositif de manoeuvre et de commande (7) pour le déclenchement d'un processus de distribution de boisson dans un récipient (9) déposé dans la zone de distribution de boisson (2), la sortie de boisson (4) étant constituée de façon réglable en hauteur au moyen d'un moteur d'entraînement et étant positionnable par rapport au bord de récipient (9.1) en fonction de la hauteur du bord de récipient,
**caractérisé en ce que**
la sortie de boisson (4) présente un dispositif de sécurité (10) avec une bascule de commutation (11), disposée sur la sortie de boisson (4), qui est supportée de façon pivotante ou basculante dans au moins un point d'appui (12), et commute un interrupteur de sécurité (13) en cas de contact avec le bord de récipient (9.1) pour interrompre le réglage en hauteur de la sortie de boisson (4) par le moteur d'entraînement.

2. Préparateur de boisson selon la revendication 1,
**caractérisé en ce que**
le dispositif de sécurité (10) présente une bascule de commutation (11) chargée par ressort.

3. Préparateur de boisson selon la revendication 1,
**caractérisé en ce que**
la sortie de boisson (4) présente deux points d'appui (12) opposés pour la réception de la bascule de commutation (11) dans deux pivots.

4. Préparateur de boisson selon une des revendications 1 à 3,
**caractérisé en ce que**
la bascule de commutation (11) présente une surface de commutation (11.1) qui entoure les ouvertures de distribution (4.1) de la sortie de boisson (4) dans des zones partielles.

5. Préparateur de boisson selon la revendication 4,
**caractérisé en ce que**
la surface de commutation (11.1) est constituée d'un bord (11.2) relevé dirigé vers le côté frontal et vers les côtés de la zone de distribution de boisson (2).

6. Préparateur de boisson selon une des revendications 1 à 5,
**caractérisé en ce que**
la bascule de commutation (11) présente une came de commutation (16) sur le côté arrière de la surface de commutation (11.1).

7. Préparateur de boisson selon une des revendications 1 à 6,
**caractérisé en ce que**,
sur le côté arrière de la surface de commutation (11.1), la bascule de commutation (11) présente un guidage (15) pour un ressort (14).

8. Préparateur de boisson selon la revendication 1 ou 2,
**caractérisé en ce que**,
au niveau de la sortie de boisson (4), la bascule de commutation (11) est supportée en suspension par des crochets à crans (17) dans au moins un logement.

9. Préparateur de boisson selon au moins une des revendications précitées,
**caractérisé en ce que**
la bascule de commutation (11) présente une surface de commutation (11.1) qui entoure les ouvertures de distribution (4.1) à plat jusqu'aux bords extérieurs de la sortie de boisson (4).
